(19) Europäisches Patentamt / European Patent Office / Office européen des brevets

(11) **EP 1 770 469 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(51) Int Cl.:
**F24D 19/10** *(2006.01)* **G01K 17/10** *(2006.01)*
**G05D 23/19** *(2006.01)*

(21) Anmeldenummer: **06017411.7**

(22) Anmeldetag: **22.08.2006**

(54) **Verfahren und System zur Bestimmung von Wärmekenndaten eines Heizkörpers**

Method and system for determining characteristic thermal data of a radiator

Procédeé et appareil pour déterminer les données thermiques caractéristiques d'un radiateur

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(30) Priorität: **21.09.2005 DE 102005045198**

(43) Veröffentlichungstag der Anmeldung:
**04.04.2007 Patentblatt 2007/14**

(73) Patentinhaber: **Techem Energy Services GmbH**
**65760 Eschborn (DE)**

(72) Erfinder: **Kähler, Arne, Dr.**
**12683 Berlin (DE)**

(74) Vertreter: **KEIL & SCHAAFHAUSEN**
**Patentanwälte**
**Cronstettenstraße 66**
**60322 Frankfurt am Main (DE)**

(56) Entgegenhaltungen:
**EP-A2- 1 235 131    DE-A1- 2 504 797**
**DE-U1- 9 317 309**

- **"[Extract] ED - Dipl-Ing Joachim Kreuzberg" 1. Januar 1988 (1988-01-01), HANDBUCH DER HEIZKOSTENABRECHNUNG, VDI-VERLAG, DE, PAGE(S) 165,185 - 191,201 , XP009136065 ISBN: 978-3-18-400837-6 * Seite 203, Absatz 6.1.3 - Seite 204, letzte Zeile ***

**Beschreibung**

Die Erfindung betrifft ein Verfahren zur Bestimmung von Wärmekenndaten eines Heizkörpers, bei dem die Heizkörpertemperatur und die Raumtemperatur gemessen und mit einer Korrekturgröße in die gewünschten Wärmekenndaten umgerechnet werden, sowie ein zur Durchführung dieses Verfahrens geeignetes System.

Insbesondere bei der Erfassung und Verteilung der Wärmemenge für die Raumheizung mittels elektronischer Heizkostenverteiler, aber auch bei der Bestimmung der Regelparameter für Einzelraumtemperaturregelungen werden bei modernen Systemen üblicher Weise Temperatur- und/oder Strömungswerte der Heizkörper gemessen, um daraus die benötigten Wärmekenndaten eines Heizkörpers zu bestimmen.

Elektronische Heizkostenverteiler, die dem heutigen Stand der Technik entsprechen, berechnen den Anzeigefortschritt der verbrauchten Wärmemenge (Wärmemengeninkrement) $\Delta Q$ auf Basis des Potenzgesetzes:

$$\Delta Q = \Delta t \cdot \dot{Q} \approx \Delta t \cdot \dot{Q}_{Nenn} \cdot \left( \frac{\Delta_{\log}}{\Delta_{\log,Nenn}} \right)^n,$$

wobei $\Delta t$ das Berechnungsintervall für das Wärmemengeninkrement, $\dot{Q}$ die aktuelle Heizkörperleistung, $\dot{Q}_{Nenn}$ die Heizkörpernennleistung im Auslegungspunkt, $\Delta_{\log}$ die aktuelle logarithmische Übertemperatur, $\Delta_{\log,Nenn}$ die logarithmische Übertemperatur im Auslegungspunkt, z.B. im Auslegungspunkt (90,70,20) $\Delta_{\log,60}$ =59,44$K$, und n der Heizkörperexponent sind.

Die aktuelle logarithmische Übertemperatur $\Delta_{\log}$ kann bspw. mit einem elektronischen Heizkostenverteiler bestimmt werden, der mit zwei Temperatursensoren typischerweise die heizkörperseitige Temperatur $\hat{\vartheta}_{HKS}$, bspw. die Heizkörperoberflächentemperatur an der Heizfläche, und die raumseitige Temperatur $\hat{\vartheta}_{RLS}$, insbesondere die Heizkörperumgebungstemperatur in der Nähe des Heizkörpers, erfassen. Die logarithmische Übertemperatur $\Delta_{\log}$ wird dann wie folgt berechnet:

$$\Delta_{\log} = K_{Ges} \cdot \left( \hat{\vartheta}_{EHKV,HKS} - \hat{\vartheta}_{EHKV,RLS} \right),$$

wobei $K_{Ges} = \dfrac{1}{1-C_{Ges}}$ einen Korrekturfaktor für den jeweiligen Heizkörper darstellt. Der Korrekturfaktor $K_{Ges}$ kann auch in das Produkt eines wasserseitigen Korrekturfaktors $K_{CW} = \dfrac{1}{1-C_w}$ und eines luftseitigen Korrekturfaktors $K_{CL} = \dfrac{1}{1-C_L}$ aufgespaltet werden.

Die heizkörperspezifischen Korrekturfaktoren $K_{Ges},K_{CW},K_{CL}$ werden aus den entsprechenden heizkörperspezifischen C-Werten berechnet, die für jeden Heizkörper entweder messtechnisch oder simulativ ermittelt werden müssen. In der heutigen Praxis der Heizkostenverteilung werden als C-Werte bzw. Korrekturfaktoren $K_{Ges},K_{CW},K_{CL}$ einmal ermittelte, feste Werte verwendet. Hierzu wird beispielsweise auf Kreuzberg, Handbuch der Heizkostentechnik, VDI-Verlag, 1988, verwiesen.

In diesem Zusammenhang ist es bspw. aus der DE 101 08 847 C1 bekannt, zur Regelung der Raumtemperatur die mit den Sensoren gemessenen Temperaturwerte für die Raumlufttemperatur bei einer Zwei-Fühler-Messung mittels eines Korrekturalgorithmus zu korrigieren. Dadurch sollen insbesondere die verfälschenden Einflüsse der Heizmediumtemperatur und der Strahlungseinfluss des Heizkörpers korrigiert werden.

Die DE 25 04 797 A1 offenbart einen Wärmemengenmesser zum Messen der von einem strömendem Medium abgegebenen Wärmemenge, wobei die Vorlauftemperatur, die Rücklauftemperatur und das Volumen des durchströmenden Mediums gemessen werden. Die Wärmemenge wird aus diesen Messgrößen und einem sog. k-Faktor berechnet, der linear von der gemessenen Rücklauftemperatur abhängt. Hierdurch wird die Variation der Wichte und Wärmekapazität des Wassers berücksichtigt, die von dem Unterschied zwischen der Vorlauftemperatur und Rücklauftemperatur und der Temperatur des Mediums abhängt.

Ferner ist aus der DE 101 08 852 C2 bekannt, bei einer Raumtemperaturregelung, welche auf einer Zwei-Fühler-Messung beruht, einen dritten Messfühler vorzusehen, um die Betriebskennlinie des Heizkörperschließventils zu ermitteln und die Regelparameter der Raumtemperaturregelung in Abhängigkeit von dem Arbeitspunkt des Ventils an die Betriebskennlinie anzupassen.

Die vorgenannten Korrekturen hängen jedoch von den heizkörperspezifischen Korrekturfaktoren ab und benötigen empirische Modelle für die Korrekturmechanismen. Die Ermittlung dieser Modelle ist aufwendig und lässt sich nicht universal für die Berechnung von Heizkörperkenndaten jeglicher Art heranziehen.

Aufgabe der Erfindung ist es daher, universell einsetzbare Korrekturgrößen vorzuschlagen, die zur Bestimmung einer Vielzahl von oder aller Wärmekenndaten des Heizkörpers herangezogen werden können.

Diese Aufgabe wird bei dem Verfahren der eingangs genannten Art mit den Merkmalen des Anspruchs 1 gelöst. Dabei ist insbesondere vorgesehen, dass die Korrekturgröße von dem aktuellen Arbeitspunkt des Heizkörpers abhängt, welcher durch die Heizkörpervorlauftemperatur ist. Dabei wird als Korrekturgröße vorzugsweise der Korrekturfaktor $K_{GES}$ für die Bestimmung der logarithmischen Übertemperatur verwendet, weil letzterer einen unmittelbaren Einfluss auf eine Vielzahl der interessierenden Wärmekenndaten eines Heizkörpers hat. Die Korrekturfaktoren $K_{CW}$ oder $K_{CL}$ finden bei der Bestimmung der aktuellen Heizkörperumgebungstemperatur Anwendung, die bspw. bei einer Berechnung von Heizkörperversorgungszuständen bzw. von Heizkörpervorlauf- oder Heizkörperrücklauftemperaturen benötigt werden, sofern die jeweils andere Temperatur bekannt ist.

Erfindungsgemäß soll die Korrekturgröße von dem aktuellen Arbeitspunkt des Heizkörpers abhängen. Dem liegt die Erkenntnis zugrunde, dass die Korrekturgröße keineswegs, wie bei den bisherigen Verfahren angenommen, ein für einen Heizkörper konstanter Wert ist, sondern dass die Korrekturgröße teilweise erheblich von dem jeweiligen Arbeitspunkt des Heizkörpers abhängt. Dabei kann im Rahmen der erforderlichen Genauigkeit der Arbeitspunkt des Heizkörpers bereits durch Ermittlung der nachfolgenden Heizkörpervorlauftemperatur mit ausreichender Genauigkeit festgelegt werden, so dass der Korrekturfaktor insbesondere als Funktion dieser Größe ausgebildet sein kann. Natürlich können auch die Wärmekenndaten selbst oder andere Korrekturgrößen als Zwischendaten von diesen Größen abhängen.

Im Gegensatz zu den bereits bekannten Verfahren zur Bestimmung von Wärmekenndaten eines Heizkörpers, beispielsweise des Wärmemengenverbrauchs, welche durch Verwendung eines festen, heizkörperspezifischen Korrekturfaktors nur eine ungenaue Berechnung der aktuellen logarithmischen Übertemperatur, der aktuellen Heizkörperwärmeleistung, der abgegebenen Wärmemenge bzw. des Wärmemengeninkrements oder dergleichen erlauben und aus diesem Grund zusätzliche Korrekturmechanismen erfordern, wird durch die korrekte Berücksichtigung des aktuellen Arbeitspunkts des Heizkörpers bei der Berechnung einer Korrekturgröße eine genaue Bestimmung der Wärmekenndaten eines Heizkörpers ohne individuelle Korrekturen für jede einzelne Größe ermöglicht. Insbesondere kann die Korrekturgröße selbst als von dem heizkörperspezifischen C-Wert abhängige Größe eine interessierende Größe der Wärmekenndaten des Heizkörpers sein.

Gemäß der Erfindung hängt also die die Korrekturgröße von der Heizkörperübertemperatur, welche durch die Differenz der Heizkörpertemperatur und der Raumtemperatur bzw. Heizkörperumgebungstemperatur gebildet wird, und von der Heizkörpervorlauftemperatur ab. Diese Temperaturen können einfach mit Hilfe von drei Heizkörpersensoren bestimmt werden, so dass das Verfahren messtechnisch besonders einfach umsetzbar ist.

Um die Anzahl der verschiedenen Korrekturmechanismen bei Anwendung des Verfahrens zu beschränken und insbesondere nur einen zentralen Korrekturmechanismus vorzusehen, werden die gemessenen Temperaturwerte, insbesondere die Heizkörpertemperatur, die Raumtemperatur und/oder die Heizkörperübertemperatur als unkorrigierte Temperaturmesswerte verwendet. Die einzige vorzunehmende Korrektur für die Bestimmung der Vielzahl der Wärmekenndaten des Heizkörpers liegt also in der Arbeitspunktabhängigkeit der Korrekturgröße von dem Heizkörper.

In einer besonders einfachen Ausgestaltung des erfindungsgemäßen Verfahrens können die Korrekturgröße und ggf. auch Wärmekenndaten in Form eines Polynoms berechnet werden, das mathematisch einfach handhabbar ist und mit dem sich die Abhängigkeit der Korrekturgröße von dem Arbeitspunkt des Heizkörpers mit guter und insbesondere im Rahmen der erforderlichen Genauigkeit ausreichenden Präzision nachbilden lässt.

Einfacherweise kann das Polynom, welches insbesondere zur Bestimmung der Korrekturgröße herangezogen wird, als Funktion der Heizkörpertemperatur, der Raumtemperatur, der Heizkörperumgebungstemperatur oder vorzugsweise der Heizkörperübertemperatur gebildet sein. Die Polynomkoeffizienten hängen dabei vorzugsweise von der Heizkörpervorlauftemperatur ab.

Es hat sich herausgestellt, dass ein Polynom zweiter Ordnung die Abhängigkeit der Korrekturgröße von dem Arbeitspunkt des Heizkörpers in geeigneter Weise beschreiben kann. Zur Bestimmung der Polynomkoeffizienten können diskrete Stützstellen in der Funktion der Polynomkoeffizienten in Abhängigkeit der Heizkörpervorlauftemperatur verwendet werden, um die Polynomkoeffizienten am Arbeitspunkt des Heizkörpers zu bestimmen. Es hat sich gezeigt, dass vier Stützstellen in dem in der Praxis benötigten Arbeitsbereich des Heizkörpers für eine hohe Genauigkeit ausreichend sind. Liegt beispielsweise die aktuell gemessene Heizkörpervorlauftemperatur zwischen den vorbestimmten Stützstellen, in denen die Polynomkoeffizienten ermittelt wurden, können an sich bekannte Interpolationsverfahren, beispielsweise eine lineare Interpolation, zum Einsatz kommen.

Besonders einfach lässt sich eine Berechnung von Wärmekenndaten mit einer universellen Korrektur erreichen, wenn die Wärmekenndaten, die Korrekturgröße und/oder ein Polynomkoeffizient von den Heizkörper-C-Werten abhängen, welche maßgeblich die Eigenschaften des Heizkörpers im Arbeitspunkt bestimmen.

Als Wärmekenndaten bzw. Berechnungszielgrößen des Heizkörpers können ein als Korrekturgröße verwendeter Korrekturfaktor, die unkorrigierte oder logarithmische Heizkörperübertemperatur des Heizkörpers, eine Heizkörperleistung, ein Wärmemengeninkrement, eine Heizkörperrücklauf- bzw. -vorlauftemperatur, ein Heizkörpermassenstrom, eine Heizkörperumgebungstemperatur, eine Heizkörperkennlinie, eine Ventilkennlinie und/oder eine Ventilautorität bestimmt werden. Für die Bestimmung der Heizkörper- bzw. Ventilkennlinie ist es vorteilhaft, wenn als weitere Eingangsgröße die Ventilhubstellung beispielsweise aus einer elektronischen Einzelraumtemperaturregelung bekannt ist, so dass die Heizkörper- bzw. Ventilkennlinie und schlussendlich auch die Ventilautorität mitlaufend automatisch berechnet werden können. Daher kann das vorliegende Verfahren auch für die automatische Adaption von Reglerparametern für elektronische Einzelraumregelungen verwendet werden, ähnlich dem in der DE 101 08 852 C2 beschriebenen Konzept.

Die Erfindung bezieht sich auch auf ein System zur Bestimmung von Wärmekenndaten eines Heizkörpers gemäß Anspruch 9, welches insbesondere zur Durchführung des vorbeschriebenen Verfahrens geeignet und eingerichtet ist. Dazu weist das System einen ersten Temperatursensor zur Erfassung einer Heizkörpertemperatur, einen zweiten Temperatursensor zur Erfassung einer Raumtemperatur, insbesondere der Heizkörperumgebungstemperatur, mindestens einen weiteren Sensor zur Erfassung der Heizkörpervorlauftemperatur und eine Recheneinheit zur Berechnung von Wärmekenndaten auf. Um erfindungsgemäß die Abhängigkeit vom Arbeitspunkt des Heizkörpers zu berücksichtigen, ist in der Recheneinheit ein Modul zur Bestimmung einer Korrekturgröße in Abhängigkeit von dem durch die Heizkörpervorlauftemperatur bestimmten aktuellen Arbeitspunkt des Heizkörpers sowie ein Modul zur Bestimmung der Wärmekenndaten vorgesehen.

Vorzugsweise sind dabei der erste und der zweite Temperatursensor in einem herkömmlichen Heizkostenverteiler integriert, wie er bereits vielfältig im Einsatz ist.

Der weitere Sensor kann erfindungsgemäß ein Heizkörpertemperatur- oder Gebäudevorlauftemperatursensor sein. Es ist auch möglich, dass die Sensoren einer Einzelraumtemperaturregelung verwendet werden, welche typischer Weise an dem Vorlauf eines Heizkörpers angebracht ist und einen Vorlauftemperatur und einen Umgebungstemperatursensor aufweist. Anstelle einer berechneten (korrigierten) Heizkörperumgebungskorrektur kann dann die gemessene Raumlufttemperatur des Umgebungstemperatursensors als zusätzliche Hilfs- oder Referenzgröße für die Berechung der Wärmekenndaten verwendet werden.

Ferner kann die Recheneinheit in einem Datensammler integriert sein, der in der Regel ohnehin einen Datenprozessor aufweist.

Daher ist das erfindungsgemäß vorgeschlagene System in Heizungsanlagen einfach nachrüstbar, die bereits mit elektronischen und kommunikationsfähigen Heizkostenverteilern ausgestattet wurden. Zusätzlich ist dann insbesondere lediglich ein weiterer Vorlauftemperatursensor notwendig. Die zur Durchführung des erfindungsgemäßen Verfahrens notwendige Logik kann einfacher Weise in einen zentralen oder dezentralen, intelligenten Datensammler integriert werden, welcher vorzugsweise bidirektionale Kommunikationsmöglichkeiten aufweist. Bei der nachträglichen Installation des Systems zur Durchführung des erfindungsgemäßen Verfahrens kann der Verfahrensablauf auch durch eine nachladbare Software in der Recheneinheit installiert werden. Damit kann für das System die bereits bestehende Technik verfügbarer, kostengünstiger elektronischer und kommunikationsfähiger Heizkostenverteiler beispielsweise auch Funkheizkostenverteiler, verwendet werden, die in bestehenden Heizungsanlagen einfach installierbar oder nachinstallierbar sind.

Weitere Merkmale, Ziele und Anwendungsmöglichkeiten der vorliegenden Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der vorliegenden Erfindung, auch unabhängig von der Zusammenfassung in den Ansprüchen oder deren Rückbezügen.

Es zeigen:

Fig. 1       die Abhängigkeit des Korrekturfaktors von dem Massenstromverhältnis;

Fig. 2       die Abhängigkeit des Korrekturfaktors von der gemessenen Übertemperatur des Heizkostenverteilers;

Fig.3        den Signalflussplan zur Durchführung des erfindungsgemäßen Verfahrens gemäß einer ersten Ausführungsform;

Fig. 4      ein System zur Durchführung des Verfahrens gemäß Fig. 3;

Fig. 5      den Signalflussplan zur Durchführung des erfindungsgemäßen Verfahrens gemäß einer zweiten Ausführungsform;

Fig. 6      ein System zur Durchführung des Verfahrens gemäß Fig. 5;

Fig. 7      den Signalflussplan zur Durchführung eines zu der Erfindung alternativen Verfahrens;

Fig. 8      ein System zur Durchführung des Verfahrens gemäß Fig. 7;

Fig. 9      eine zweite Ausführungsform eines Systems zur Durchführung des Verfahrens gemäß Fig. 5;

Fig. 10     eine dritte Ausführungsform eines Systems zur Durchführung des Verfahrens gemäß Fig. 5;

Fig. 11     die logarithmische Übertemperatur in Abhängigkeit von dem Massenstromverhältnis für verschiedene Vorlauftemperaturen;

Fig. 12     die Heizkörperleistung in Abhängigkeit von dem Massenstromverhältnis für verschiedene Vorlauftemperaturen;

Fig. 13     die im Heizkostenverteiler gemessene Lufttemperatur in Abhängigkeit von dem Massenstromverhältnis für verschiedene Vorlauftemperaturen;

Fig. 14     die tatsächliche Lufttemperatur in Abhängigkeit von dem Massenstromverhältnis für verschiedene Vorlauftemperaturen;

Fig. 15     den relativen Volumenstrom in Abhängigkeit von dem relativen Ventilhub für verschiedene Ventilautoritäten und

Fig. 16     die relative Heizkörperleistung in Abhängigkeit von dem relativen Ventilhub für verschiedene Ventilautoritäten.

Bisher werden bei elektronischen Heizkostenverteilern das zur Erfassung der verbrauchten Wärmemenge erforderliche Wärmeinkrement $\Delta Q$ in einem Berechnungsintervall $\Delta t$ aus der Heizkörpernennleistung $\dot{Q}_{Nenn}$ im Auslegungspunkt und dem Verhältnis der aktuellen logarithmischen Übertemperatur $\Delta_{log}$ zu der logarithmischen Übertemperatur im Auslegungspunkt $\Delta_{log,\,Nenn}$ berechnet. Die logarithmische Übertemperatur $\Delta_{log}$ ist dabei als Differenz aus der heizkörperseitigen Temperatur $\vartheta_{;HKS}$ und der raumseitigen Temperatur $\vartheta_{;RLS}$ gebildet, welche mit einem Korrekturfaktor $K_{GES}$ multipliziert wird.

In der bisherigen Praxis wird dieser Korrekturfaktor $K_{GES}$ als konstant angenommen.

Da dieser Korrekturfaktor $K_{GES}$, welcher von reziproken, heizkörperspezifischen C-Werten abhängt, jedoch mit dem jeweiligen Arbeitspunkt des Heizkörpers variiert, wird durch die Verwendung eines konstanten Korrekturfaktors $K_{GES}$ ein mehr oder weniger großer Fehler in der Berechnung der Wärmemenge oder anderer Wärmekenndaten des Heizkörpers gemacht.

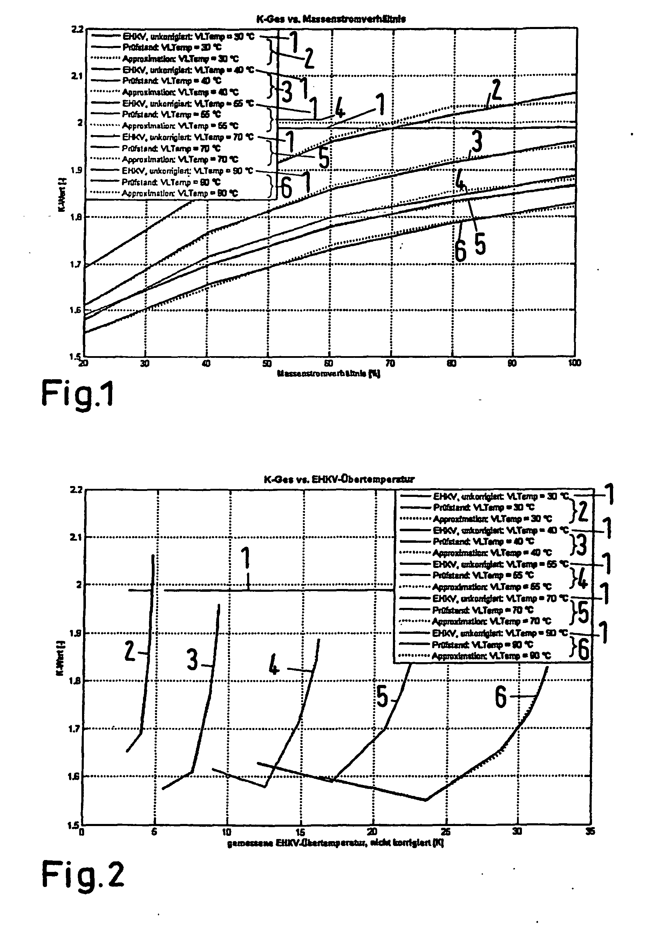

Die Abhängigkeit des Korrekturfaktors von dem beispielsweise durch das Massenstromverhältnis oder die gemessene Übertemperatur charakterisierten Arbeitspunkt des Heizkörpers ist für verschiedene Vorlauftemperaturen in den Fig. 1 und 2 dargestellt. In den dargestellten Kennlinienbildern ist mit dem Bezugszeichen 1 jeweils der unkorrigierte, konstante Korrekturfaktor $K_{GES}$ dargestellt. Die tatsächliche Abhängigkeit zeigen die durchgezogenen Linien mit den Bezugszeichen 2 bis 6, die in einem Prüfstand gemessen wurden. Als gepunktete Linien ist eine erfindungsgemäß verwendete Approximation des Korrekturfaktors $K_{GES}$ dargestellt.

Um diese Abhängigkeiten zu berücksichtigen, wird bei einem Verfahren zur Bestimmung von Wärmekenndaten eines Heizkörpers, welche sowohl Zwischen- als auch Zielgrößen sein können, eine Korrekturgröße $K_{GES}$ verwendet, die von dem aktuellen Arbeitspunkt des Heizkörpers abhängt und die dargestellte Abhängigkeit berücksichtigt. Diese Korrekturgröße, welche eine Zwischengröße bei der Berechnung der Wärmekenndaten des Heizkörpers darstellt und mit dem C-Wert des Heizkörpers korreliert ist, kann beispielsweise zur Berechnung der aktuellen logarithmischen Heizkörperübertemperatur $\Delta_{log}$, der aktuellen Heizkörperwärmeleistung $\dot{Q}$ und der abgegebenen Heizkörperwärmemenge bzw. des Anzeigefortschritts des Wärmeinkrements $\Delta Q$ des Heizkostenverteilers verwendet werden. Somit wird durch diese eine Korrekturgröße $K_{GES}$, welche einen Faktor zu den gemessenen Heizkörper- und Umgebungstemperaturen darstellt, eine universelle Größe bestimmt, die zur Verwendung sämtlicher bzw. einer Vielzahl der Wärmekenndaten des Heizkörpers gleichermaßen verwendet werden kann, ohne dass individuelle Korrekturen vorgenommen werden müssen.

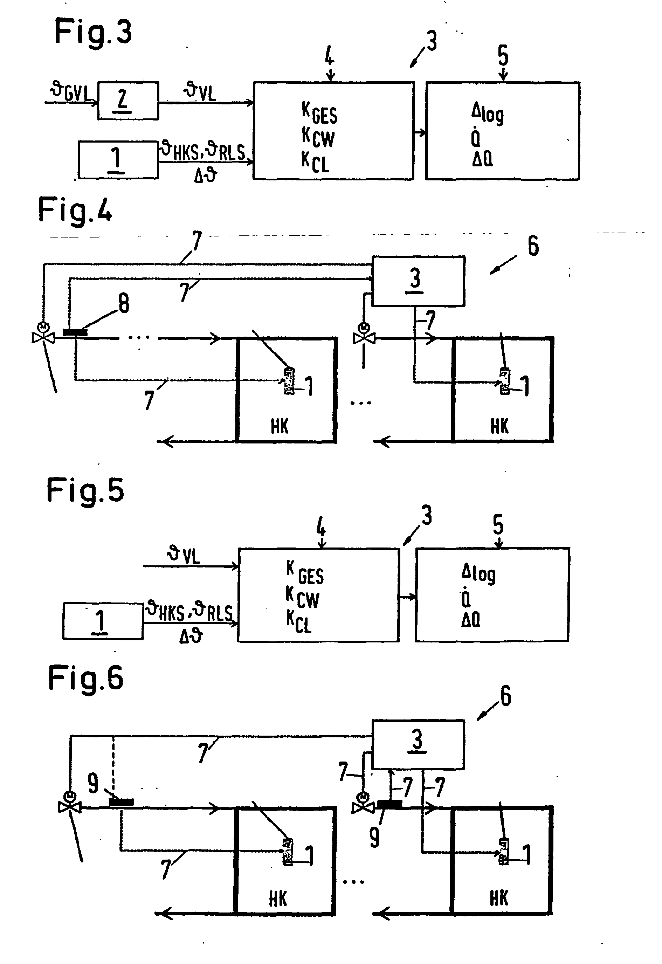

Das Verfahren wird für eine erste Ausführungsform anhand des in Fig. 3 dargestellten Signalflussplans näher beschrieben. Mittels einer Messeinrichtung am Heizkörper werden eine Heizkörpertemperatur $\vartheta;_{HKS}$ und eine Raumtemperatur $\vartheta;_{RLS}$ gemessen, deren Differenz die gemessene Heizkörperübertemperatur $\Delta\vartheta$ ergibt. Die Messeinrichtung am Heizkörper kann beispielsweise ein Heizkostenverteiler 1 sein. Ferner ist die gesamte Vorlauftemperatur $\vartheta_{GVL}$ im Gebäude bekannt, welche über ein Rohrmodell 2 in eine Heizkörpervorlauftemperatur $\vartheta_{VL}$ umgerechnet wird. Dazu wird der Vorlauftemperaturverlust in dem Heizungsrohrsystem in Abhängigkeit von der Länge der Vorlauftemperaturzuleitung zu dem Heizkörper sowie ggf. weiterer Einflussgrößen wie Lage der Rohre, Wärmeschutzummantelung und dergleichen bestimmt.

Diese Eingangsgrößen $\vartheta;_{HKS}$, $\vartheta;_{RLS}$, bzw. $\Delta\vartheta;$ und $\vartheta;_{VL}$ werden einer Recheneinheit 3 zugeleitet, die ein Modul 4 zur Bestimmung einer Korrekturgröße $K_{GES}$, $K_{CW}$, $K_{CL}$ und ein Modul 5 zur Bestimmung von Wärmekenndaten aufweist.

Bei der in dem Modul 4 bestimmten Korrekturgröße handelt es sich um einen oder mehrere der Korrekturfaktor $K_{GES}$, $K_{CW}$, $K_{CL}$. Der Korrekturfaktor $K_{GES}$ wird mit der Differenz der gemessenen, unkorrigierten Temperaturwerte $\vartheta;_{HKS}$ und $\vartheta;_{RLS}$ zur logarithmischen Heizkörperübertemperatur $\Delta_{log}$, einer der Wärmekenndaten des Heizkörpers, multipliziert. Weitere Wärmekenndaten können die aktuelle Heizkörperwärmeleistung $\dot{Q}$, das abgegebene Heizkörperwärmemengeninkrement $\Delta Q$, die mit der abgegebenen Wärmemenge einhergehenden Kosten sein. Ferner können auch unter Verwendung der Korrekturgrößen $K_{CW}$, $K_{CL}$ die Rücklauftemperatur (bei bekannter Vorlauftemperatur oder umgekehrt) ein Versorgungszustand des Raumes oder Heizkörpers zur Wärmeadaptionsregelung und/oder eine Heizkörper- und Ventilkennlinie sein.

Die Arbeitspunktabhängigkeit wird erfindungsgemäß also dadurch berücksichtigt, dass zusätzlich zu den in einem Heizkostenverteiler 1 ohnehin messtechnisch erfassten heizkörperseitigen und raumseitigen Temperaturen, insbesondere der Heizkörperoberflächentemperatur und der Raumlufttemperatur, die Heizkörpervorlauftemperatur messtechnisch erfasst wird und in die Berechnung der Zwischen- und Zielgrößen ($K_{GES}$, $\Delta_{log}$ u.a.) eingeht. Dabei ist es besonders vorteilhaft, die zu berechnende Ziel- oder Zwischengröße in Abhängigkeit der unkorrigierten, gemessenen Heizkörperübertemperatur $\Delta\vartheta$ und der zusätzlich erfassten Vorlauftemperatur $\vartheta;_{VL}$ zu berechnen.

Die Kombination aus aktueller Vorlauftemperatur $\vartheta;_{VL}$ und der aktuellen Heizkörperübertemperatur $\Delta\vartheta;$ stellt eine eindeutige Beschreibung des Heizkörperarbeitspunktes dar.

In dem Modul 4 wird der Korrekturfaktor $K_{GES}$, $K_{CW}$, $K_{CL}$ bzw. die entsprechende Ziel- oder Zwischengröße in Form eines Polynoms berechnet, wobei die von der Heizkörperübertemperatur $\Delta\vartheta$ unabhängigen Polynomkoeffizienten $a_m$ in Abhängigkeit der zusätzlich erfassten Vorlauftemperatur $\vartheta;_{VL}$ bestimmt werden. Das bietet den wesentlichen Vorteil, dass diese Polynomkoeffizienten $a_m$ aus den ohnehin erforderlichen Heizkörper-C-Wertmessungen vorab ermittelt werden können und somit als Parametersatz in die Algorithmik des Moduls 4 eingehen können. Die Berechnung wird nachfolgend beispielhaft für den Korrekturfaktor $K_{GES}$ dargestellt:

$$K_{Ges}(\vartheta_{VL}, \Delta_{EHKV}) = \sum_{m=0}^{M} a_m(\vartheta_{VL}) \cdot \Delta_{EHKV}^{m} \,,$$

wobei $\Delta_{EHKV} = \partial_{EHKV,HKS} - \partial_{EHKV,RLS}$ die unkorrigierte EHKV-Übertemperatur $\Delta\partial$ und die Maritx

$$\begin{bmatrix} a_0(\vartheta_{VL\_1}) & \dots & a_0(\vartheta_{VL\_n}) \\ a_1(\vartheta_{VL\_1}) & \dots & a_1(\vartheta_{VL\_n}) \\ a_M(\vartheta_{VL\_1}) & \dots & a_M(\vartheta_{VL\_n}) \end{bmatrix}$$

Polynomkoeffizienten in den Stützpunkten der Vorlauftemperatur sind.

Gute Ergebnisse erzielt man bereits mit einem Polynom zweiter Ordnung und mit 4 Stützstellen in der Heizkörpervorlauftemperatur $\vartheta;_{VL}$.

Liegt die gemessene aktuelle Heizkörpervorlaoftemperatur $\vartheta;_{VL}$ zwischen den verwendeten Stützstellen, in

denen die Polynomkoeffizienten $a_m$ ermittelt wurden, so können etablierte Interpolationsverfahren zum Einsatz kommen. Gute Ergebnisse werden bereits mit einem linearen Interpolationsansatz erzielt:

$$K_{Ges,IP}(\hat{\vartheta}_{VL}, \Delta_{EHKV}) = k_{Anstieg} \cdot \left(\hat{\vartheta}_{VL} - \vartheta_{VL}^{unten}\right) + k_0,$$

wobei

$$k_{Anstieg} = \frac{K_{Ges}(\vartheta_{VL}^{oben}, \Delta_{EHKV}) - K_{Ges}(\vartheta_{VL}^{unten}, \Delta_{EHKV})}{\vartheta_{VL}^{oben} - \vartheta_{VL}^{unten}},$$

$$k_0 = K_{Ges}(\vartheta_{VL}^{unten}, \Delta_{EHKV}),$$

$$K_{Ges}(\vartheta_{VL}^{oben}, \Delta_{EHKV}) = \sum_{m=0}^{M} a_m(\vartheta_{VL}^{oben}) \cdot \Delta_{EHKV}^{m},$$

$$K_{Ges}(\vartheta_{VL}^{unten}, \Delta_{EHKV}) = \sum_{m=0}^{M} a_m(\vartheta_{VL}^{unten}) \cdot \Delta_{EHKV}^{m},$$

$\vartheta_{VL}^{unten}$ der untere Stützpunkt der Vorlauftemperatur, $\vartheta_{VL}^{oben}$ der obere Stützpunkt der Vorlauftemperatur und $\Delta EHKV$ = $\vartheta_{EHKV,HKS}$ - $\vartheta_{EHKV,RLS}$ die unkorrigierte EHKV-Übertemperatur $\Delta\partial$ sind.

Mit Hilfe des somit arbeitspunktabhängig ermittelten Korrekturfaktors $K_{GES}$ werden in dem Modul 5 dann die folgenden Wärmekenndaten bzw. Zielgrößen arbeitspunktabhängig berechnet:

- $\Delta_{log}(\vartheta;_{VL}, \Delta_{EHKV}) = K_{Ges,IP}(\vartheta_{VL}, \Delta_{EHKV}) \cdot (\vartheta_{EHKV,HKS} - \vartheta_{EHKV,RLS})$ als aktuelle logarithmische Heizkörper-Übertemperatur,

- $\dot{Q}(\hat{\vartheta}_{VL}, \Delta_{EHKV}) = \dot{Q}_{Nenn} \cdot \left(\frac{\Delta_{log}(\hat{\vartheta}_{VL}, \Delta_{EHKV})}{\Delta_{log,Nenn}}\right)^n$ als aktuelle Heizkörperleistung

- $\Delta Q(\hat{\vartheta}_{VL}, \Delta_{EHKV}) = \Delta t \cdot \dot{Q}_{Nenn} \cdot \left(\frac{\Delta_{log}(\hat{\vartheta}_{VL}, \Delta_{EHKV})}{\Delta_{log,Nenn}}\right)^n$ als aktuelles Wärmemengeninkrement.

Weitere Zielgrößen wie etwa der aktuelle Heizkörpermassenstrom, die aktuelle Heizkörperumgebungstemperatur, die Heizkörperrücklauftemperatur (bei bekannter Vorlauftemperatur) oder die Heizkörpervorlauftemperatur (bei bekannter Rücklauftemperatur) lassen sich nach dem gleichen Verfahren aus den C-Wertmessungen ermitteln:

$$f(\vartheta_{VL}, \Delta_{EHKV}) = \sum_{m=0}^{M} a_m(\vartheta_{VL}) \cdot \Delta_{EHKV}^{m}.$$

Das System zur Durchführung des zuvor in Bezug auf Fig. 3 beschriebenen Verfahrens ist in Fig. 4 dargestellt.

Das dargestellte System 6 weist an den Heizkörpern HK montierte Heizkostenverteiler 1 auf, welche über Kommunikationswege 7 mit der die Module 4 und 5 beinhaltenden Recheneinheit 3 in Verbindung stehen, die beispielsweise in einem Datensammler integriert sein kann. Die Kommunikation kann drahtgebunden, über Funk oder über ein Powerline-Busnetz erfolgen, wobei jegliche Kommunikationsverbindungen grundsätzlich geeignet sind. Ferner ist an dem gebäudezentralen Vorlauf der Heizkörper HK ein Vorlauftemperatursensor 8 angeordnet, der die Gesamtvorlauftemperatur des Gebäudes $\vartheta;_{GVL}$ misst. Diese wird in der Recheneinheit 3 mittels des Rohrmodells 2 in eine Heizkörpervorlauftemperatur des jeweiligen Heizkörpers HK umgerechnet.

In Fig. 5 ist eine Variante des in Fig. 3 beschriebenen Verfahrens dargestellt, bei dem die Vorlauftemperatur nicht zentral an einer Stelle des Gebäudes, sondern jeweils an dem Heizkörpervorlauf gemessen wird. Daher entfällt die Umrechnung der gesamten Vorlauftemperatur $\vartheta;_{GVL}$ des Gebäudes in dem Rohrmodell 2.

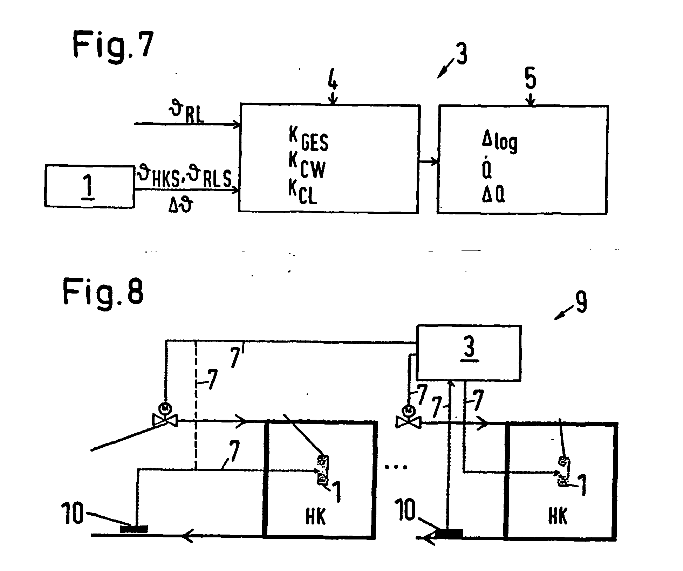

Ansonsten entspricht die in Fig. 5 dargestellte Variante dem in Fig. 3 beschriebenen Verfahren, so dass auf die vorstehende Beschreibung Bezug genommen werden kann. Entsprechendes gilt für das in Fig. 6 dargestellte System 6, das anstelle eines zentralen Vorlauftemperatursensors 8 zwei Heizkörper-Vorlauftemperatursensoren 9 an jedem Vorlauf eines Heizkörpers HK aufweist. Die in den Fig. 7 und 8 dargestellten Varianten eines alternativen Verfahrens bzw. Systems beruhen darauf, dass anstelle der Vorlauftemperatur die Rücklauftemperatur zur Festlegung des Arbeitspunktes des Heizkörpers gemessen wird, so dass anstelle der Heizkörper-Vorlauftemperatursensoren 9 dementsprechend Heizkörper-Rücklauftemperatursensoren 10 vorgesehen sind.

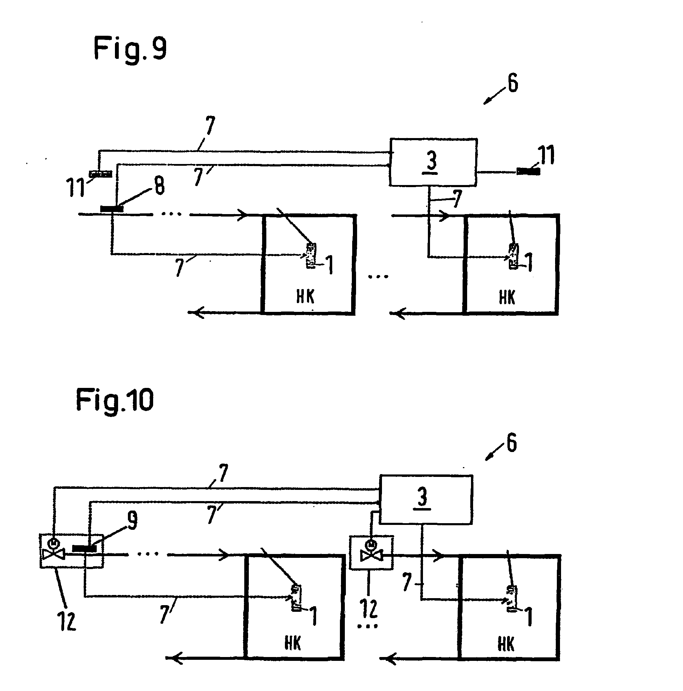

In den Fig. 9 und 10 werden weitere Varianten des Systems 6 gemäß Fig. 4 zur Durchführung des erfindungsgemäßen Verfahrens beschrieben, die grundsätzlich ähnlich aufgebaut sind, so dass nachfolgend nur auf die Unterschiede eingegangen wird.

Bei der in Fig. 9 dargestellten Variante des Systems 6 ist zusätzlich zu dem Vorlauftemperatursensor 8 ein Lufttemperatursensor 11 in der Nähe eines jeden Heizkörpers HK zur Messung der Heizkörperumgebungstemperatur vorgesehen, welche anstelle der berechneten Heizkörperumgebungstemperatur als zusätzliche Hilfs- oder Referenzgröße für die Berechnung bestimmter Wärmekenndaten der Heizkörper, insbesondere eines Heizkörperversorgungszustands, verwendet werden kann.

Das in Fig. 10 gezeigte System 6 zeigt eine in der Praxis interessante Kombination eines Heizkostenverteilers 1 und einer elektronischen Einzelraumtemperaturregelung 12, die ein Stellglied für das Heizkörperventil und einen Vorlauftemperatursensor 9 aufweist. Ferner kann in die Einzelraumtemperaturregelung 12 ein zusätzlicher Raumlufttemperatursensor integriert sein. Der an dem Heizkörperventil, also typischer Weise Heizkörpervorlauf angebrachte Regler der elektronischen Einzelraumtemperaturregelung 12 mit einem Vorlauftemperatur- und/oder einem Raumlufttemperatursensor kann die Temperaturwerte an die zentrale oder dezentrale Auswerteeinheit 3 und/oder direkt oder indirekt an die zugeordneten Heizkostenverteiler übertragen. Damit kann das erfindungsgemäße Verfahren in einem bestehenden System ohne wesentliche Nachinstallationen abgewendet werden und ist mit Lösungen für kommunikationsfähige Einzelraumtemperaturregelungen unmittelbar kombinierbar.

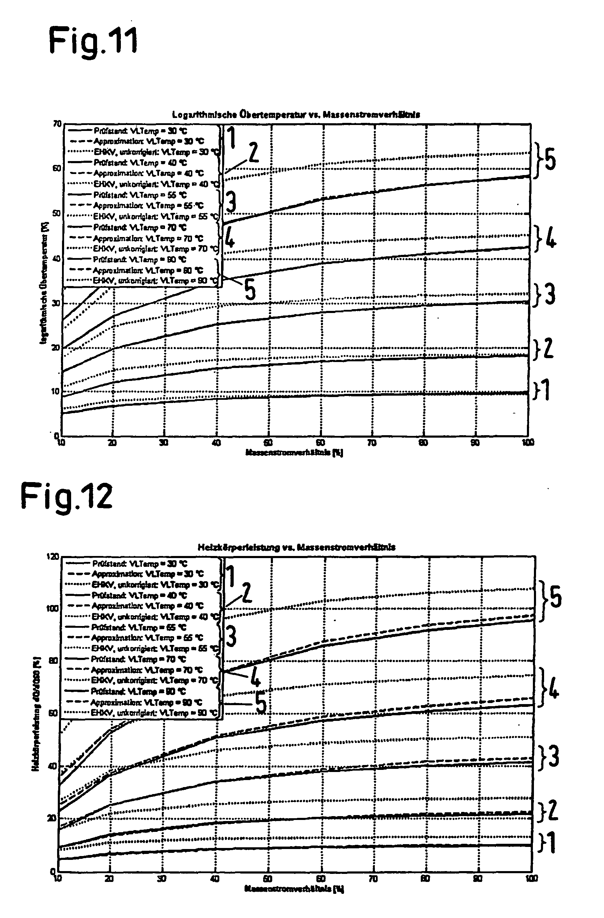

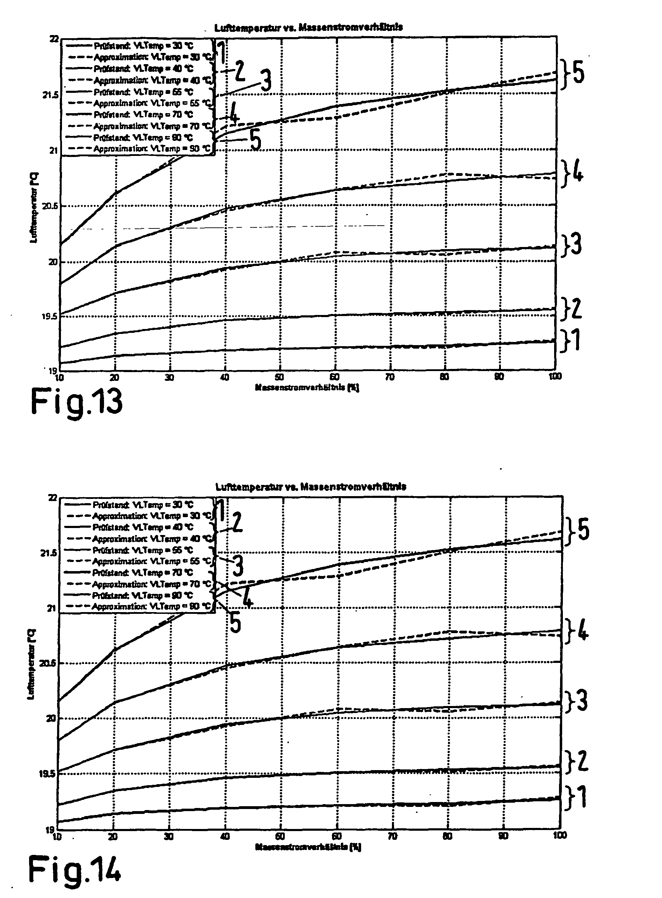

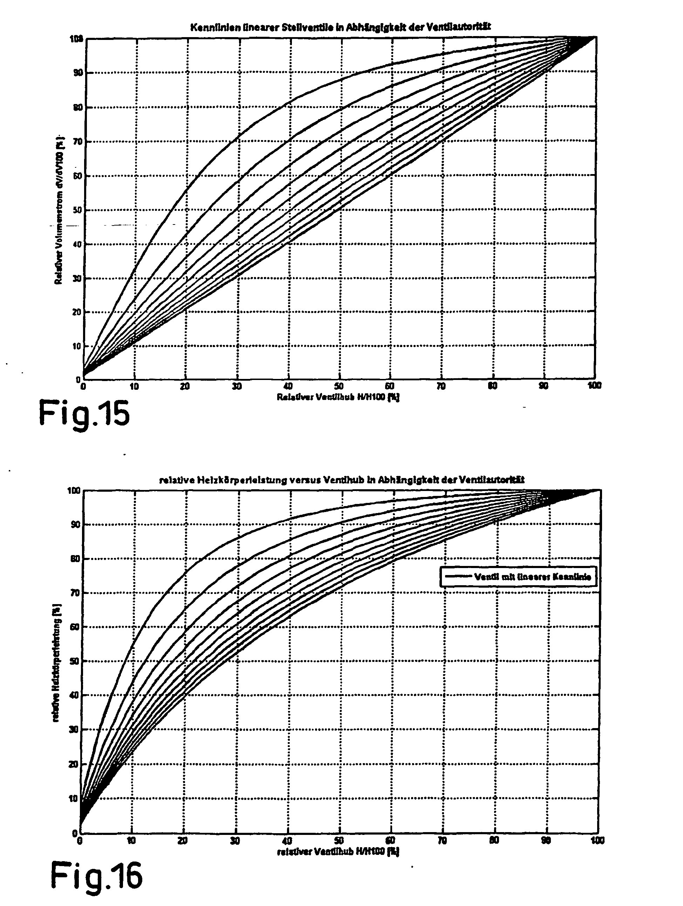

Beispielhaft werden in den Fig. 11 bis 16 die Ergebnisse des erfindungsgemäßen Verfahrens für die Bestimmung der logarithmischen Übertemperatur, der Heizkörperleistung, der am elektrischen Heizkörperverteiler gemessenen Lufttemperatur sowie der tatsächlichen Lufttemperatur, jeweils aufgetragen gegen das Massenstromverhältnis dargestellt, wobei die durchgezogenen Linien die tatsächlich auf einem Prüfstand gemessenen Messwerte, die gepunkteten Linien die aus den unkorrigierten Daten abgeleiteten Werte und die gestrichelten Linien die Ergebnisse der Anwendung des vorliegenden Verfahrens jeweils für verschiedene Vorlauftemperaturen darstellen. In den Fig. 15 und 16 sind die Kennlinien linearer Stellventile und die relative Heizkörperleistung als Funktion des relativen Ventilhubs für verschiedene Ventilautoritäten dargestellt.

Durch Anwendung des erfindungsgemäßen Verfahrens bzw. Installation des erfindungsgemäßen System in einer bestehenden Heizungsanlage ist es also auf einfache Weise möglich, die zu berechnenden Wärmekenndaten bzw. Zielgrößen des Heizkörpers auf einfache Weise miteinander zu verknüpfen, weil die anzuwendenden Korrekturwerte den tatsächlichen Arbeitspunkt des Heizkörpers berücksichtigen und somit universell gültig sind. So können aus dem berechneten Heizkörpermassenstrom und der Heizkörperleistung auch die Heizkörperkennlinien ermittelt werden. Sind außerdem noch Ventilhubstellungen bekannt, beispielsweise von einer elektronischen Einzelraumregelung, so kann zusätzlich die Heizkörper- bzw. die Ventilkennlinie und schlussendlich die Ventilautorität mitlaufend automatisch berechnet werden. Diese Ergebnisse können für die automatische Adaption von Regelparametern für die elektronische Einzelraumregelung Verwendung finden.

**Bezugszeichenliste:**

1    Heizkostenverteiler

2      Rohrmodell
3      Recheneinheit
4      Modul zur Bestimmung einer Korrekturgröße
5      Modul zur Bestimmung der Wärmekenndaten
6      System
7      Kommunikationswege
8      Vorlauftemperatursensor
9      Heizkörper-Vorlauftemperatursensoren
10     Heizkörper-Rücklauftemperatursensoren
11     Lufttemperatursensor
12     Einzelraumtemperaturregelung

HK         Heizkörper
$\Delta Q$   Wärmemengeninkrement
$\vartheta;_{HKS}$   Heizkörpertemperatur, Heizkörperoberflächentemperatur
$\vartheta_{RLS}$   Raumtemperatur
$K_{GES}$   Korrekturgröße. Korrekturfaktor
$\vartheta_{VL}$   Heizkörpervorlauftemperatur
$\vartheta_{GVL}$   Gesamtvorlauftemperatur
$\vartheta_{RL}$   Heizkörperrücklauftemperatur
$\Delta\vartheta$   Heizkörperübertemperatur
$\Delta_{log}$   logarithmische Heizkörperübertemperatur

## Patentansprüche

1.  Verfahren zur Bestimmung von Wärmekenndaten eines Heizkörpers (HK), bei dem die Heizkörpertemperatur ($\hat{\vartheta}_{HKS}$) und die Raumtemperatur ($\hat{\vartheta}_{RLS}$) gemessen und mit einer Korrekturgröße ($K_{GES}$) in die gewünschten Wärmekenndaten umgerechnet werden, **dadurch gekennzeichnet, dass** die Korrekturgröße ($K_{GES}$) von dem aktuellen Arbeitspunkt des Heizkörpers (HK) abhängt, welcher durch die Heizkörpervorlauftemperatur ($\hat{\vartheta}_{VL}$) bestimmbar ist, und dass die Korrekturgröße ($K_{GES}$) von der Heizkörperübertemperatur ($\Delta\vartheta$), welche durch die Differenz der Heizkörpertemperatur ($\hat{\vartheta}_{HKS}$) und der Raumtemperatur ($\hat{\vartheta}_{RLS}$) gebildet wird, und von der Heizkörpervorlauftemperatur ($\hat{\vartheta}_{VL}$) abhängt.

2.  Verfahren nach Anspruch 1, **dadurch gekennzeichnet, dass** Wärmekenndaten von der Heizkörperübertemperatur ($\Delta\vartheta$) und von der Heizkörpervorlauftemperatur ($\hat{\vartheta}_{VL}$) abhängen.

3.  Verfahren nach Anspruch 1 oder 2, **dadurch gekennzeichnet, dass** die Heizkörpertemperatur ($\hat{\vartheta}_{HKS}$), die Raumtemperatur ($\hat{\vartheta}_{RLS}$) und die Heizkörperübertemperatur ($\Delta\vartheta$) als unkorrigierte Temperaturmesswerte verwendet werden.

4.  Verfahren nach einem der vorhergehenden Ansprüche, **dadurch gekennzeichnet, dass** Wärmekenndaten und/oder die Korrekturgröße ($K_{GES}$) in Form eines Polynoms berechnet werden.

5.  Verfahren nach Anspruch 4, **dadurch gekennzeichnet, dass** das Polynom als Funktion der Heizkörpertemperatur ($\hat{\vartheta}_{HKS}$), der Raumtemperatur ($\hat{\vartheta}_{RLS}$) oder der Heizkörperübertemperatur ($\Delta\vartheta$) gebildet ist und Polynomkoeffizienten ($a_m$) von der Heizkörpervorlauftemperatur ($\hat{\vartheta}_{VL}$) abhängen.

6.  Verfahren nach Anspruch 4 oder 5, **dadurch gekennzeichnet, dass** ein Polynom zweiter Ordnung mit vier Stützstellen in der Heizkörpervorlauftemperatur ($\hat{\vartheta}_{VL}$) verwendet wird.

7.  Verfahren nach einem der vorhergehenden Ansprüche, **dadurch gekennzeichnet, dass** Wärmekenndaten, die Korrekturgröße ($K_{GES}$) und/oder ein Polynomkoeffizient ($a_m$) von Heizkörper-C-Werten abhängen.

8.  Verfahren nach einem der vorhergehenden Ansprüche, **dadurch gekennzeichnet, dass** als Wärmekenndaten des Heizkörpers (HK) ein als Korrekturgröße verwendeter Korrekturfaktor ($K_{GES}$), eine Heizkörperübertemperatur ($\Delta\vartheta$) eines Heizkörpers (HK), eine Heizkörperleistung ($\dot{Q}$), ein Wärmemengeninkrement ($\Delta Q$), eine Heizkörperrücklauf- bzw. -vorlauftemperatur ($\hat{\vartheta}_{VL}$, $\hat{\vartheta}_{VL}$), ein Heizkörpermassenstrom, eine Heizkörperumgebungstemperatur, eine Heizkörperkennlinie, eine Ventilkennlinie und/oder eine Ventilautorität bestimmt werden.

9. System zur Bestimmung von Wärmekenndaten eines Heizkörpers (HK) mit einem ersten Temperatursensor zur Erfassung einer Heizkörpertemperatur ($\hat{\vartheta}_{HKS}$), einem zweiten Temperatursensor zur Erfassung einer Raumtemperatur ($\hat{\vartheta}_{RLS}$), einem weiteren Sensor (8, 9) zur Erfassung der Heizkörpervorlauftemperatur ($\hat{\vartheta}_{VL}$) und einer Recheneinheit (3) zur Berechnung der Wärmekenndaten, **dadurch gekennzeichnet, dass** die Recheneinheit (3) ein Modul (4) zur Bestimmung einer Korrekturgröße ($K_{GES}$) in Abhängigkeit von dem durch die Heizkörpervorlauftemperatur ($\hat{\vartheta}_{VL}$) bestimmten aktuellen Arbeitspunkt des Heizkörpers und ein Modul (5) zur Bestimmung der Wärmekenndaten aufweist, wobei die Korrekturgröße ($K_{GES}$) von der Heizkörperübertemperatur ($\Delta\vartheta$), welche durch die Differenz der Heizkörpertemperatur ($\hat{\vartheta}_{HKS}$) und der Raumtemperatur ($\hat{\vartheta}_{RLS}$) gebildet wird, und von der Heizkörpervorlauftemperatur ($\hat{\vartheta}_{VL}$) abhängt.

10. System nach Anspruch 9, **dadurch gekennzeichnet, dass** der erste und der zweite Temperatursensor in einem Heizkostenverteiler (1) integriert sind.

11. System nach Anspruch 9 oder 10, **dadurch gekennzeichnet, dass** der weitere Sensor ein Heizkörpertemperatur- oder Gebäudevorlauftemperatursensor (8, 9) ist.

12. System nach einem der Ansprüche 9 bis 11, **dadurch gekennzeichnet, dass** die Recheneinheit (3) in einem Datensammler integriert ist.


**Claims**

1. Method for determining characteristic thermal data of a radiator (HK), in which the radiator temperature ($\hat{\vartheta}_{HKS}$) and the room temperature ($\hat{\vartheta}_{RLS}$) are measured and converted into the desired characteristic thermal data with a correction factor ($K_{GES}$), **characterized in that** the correction factor' ($K_{GES}$) depends on the current operating point of the radiator (HK), which can be determined by the radiator flow temperature ($\hat{\vartheta}_{VL}$), and that the correction factor ($K_{GES}$) depends on the radiator excess temperature ($\Delta\vartheta$), which is formed by the difference between the radiator temperature ($\hat{\vartheta}_{HKS}$) and the room temperature ($\hat{\vartheta}_{KLS}$), and on the radiator flow temperature ($\hat{\vartheta}_{VL}$) .

2. Method according to Claim 1, **characterized in that** the characteristic thermal data radiator depend on the excess temperature ($\Delta\vartheta$) and on the radiator flow temperature ($\hat{\vartheta}_{VL}$).

3. Method according to Claim 1 or 2, **characterized in that** the radiator temperature ($\hat{\vartheta}_{HKS}$) , the room temperature ($\hat{\vartheta}_{RLS}$) and the radiator excess temperature ($\Delta\vartheta$) are used as uncorrected temperature measurements.

4. Method according to any one of the preceding claims, **characterized in that** characteristic thermal data and/or the correction factor ($K_{GES}$) are calculated in the form of a polynomial.

5. The method according to Claim 4, **characterized in that** the polynomial is formed as a function of the radiator temperature ($\hat{\vartheta}_{HKS}$), the room temperature ($\hat{\vartheta}_{RLS}$) or the radiator excess temperature ($\Delta\vartheta$), and polynomial coefficients ($a_m$) depend on the radiator flow temperature ($\hat{\vartheta}_{VL}$).

6. The method according to Claim 4 or 5, **characterized in that** a second-order polynomial with four interpolation points in the radiator flow temperature ($\hat{\vartheta}_{VL}$) is used.

7. Method according to any one of the preceding claims, **characterized in that** characteristic thermal data, the correction factor ($K_{GES}$) and/or a polynomial coefficient ($a_m$) depend on radiator C-values.

8. Method according to any one of the preceding claims, **characterized in that** the characteristic thermal data of the radiator (HK) determined are a correction variable used as a correction factor ($K_{GES}$), a radiator excess temperature ($\Delta\vartheta$) of a radiator (HK), a radiator power ($\dot{Q}$), a heat-quantity increment ($\Delta Q$), a radiator return or flow temperature ($\hat{\vartheta}_{RL}$, $\hat{\vartheta}_{VL}$), a radiator mass flow, a radiator ambient temperature, a radiator characteristic, a valve characteristic and/or a valve authority.

9. System for determining characteristic thermal data of a radiator (HK), with a first temperature sensor for detecting a radiator temperature ($\hat{\vartheta}_{HKS}$), a second temperature sensor for detecting a room temperature ($\hat{\vartheta}_{RLS}$), an additional

sensor (8, 9) for detecting the radiator flow temperature $(\hat{\vartheta}_{VL})$ and a calculating unit (3) for calculating the characteristic thermal data, **characterized in that** the calculating unit (3) has a module (4) for determining a correction factor $(K_{GES})$ in accordance with the current operating point of the radiator given by the radiator flow temperature $(\hat{\vartheta}_{VL})$ and a module (5) for determining the characteristic thermal data, wherein the correction factor $(K_{GES})$ depends on the radiator excess temperature $(\Delta\vartheta)$, which is formed by the difference between the radiator temperature $(\hat{\vartheta}_{HKS})$ and the room temperature $(\hat{\vartheta}_{RLS})$, and on the radiator flow temperature $(\hat{\vartheta}_{VL})$.

10. System according to Claim 9, **characterized in that** the first and the second temperature sensor are integrated in a heat cost allocator (1).

11. System according to Claim 9 or 10, **characterized in that** the additional sensor is a radiator temperature sensor or a building supply temperature sensor (8, 9).

12. System according to any one of Claims 9 to 11, **characterized in that** the calculating unit (3) is integrated in a data collector.

**Revendications**

1. Procédé pour déterminer des données de caractéristiques thermiques d'un radiateur (HK), avec lequel la température du radiateur $(\hat{\vartheta}_{HKS})$ et la température ambiante $(\hat{\vartheta}_{RLS})$ sont mesurées et sont recalculées avec une grandeur de correction $(K_{GES})$ pour obtenir les données de caractéristiques thermiques souhaitées, **caractérisé en ce que** la grandeur de correction $(K_{GES})$ dépend du point de fonctionnement réel du radiateur (HK), lequel peut être déterminé par la température de canalisation montante du radiateur $(\hat{\vartheta}_{VL})$, et **en ce que** la grandeur de correction $(K_{GES})$ dépend de la température de canalisation descendante du radiateur $(\Delta\vartheta)$, laquelle est formée par la différence entre la température du radiateur $(\hat{\vartheta}_{HKS})$ et la température ambiante $(\hat{\vartheta}_{RLS})$, et de la température de canalisation montante du radiateur $(\hat{\vartheta}_{VL})$.

2. Procédé selon la revendication 1, **caractérisé en ce que** des données de caractéristiques thermiques dépendent de la température de canalisation descendante du radiateur $(\Delta\vartheta)$ et de la température de canalisation montante du radiateur $(\hat{\vartheta}_{VL})$.

3. Procédé selon la revendication 1 ou 2, **caractérisé en ce que** la température du radiateur $(\hat{\vartheta}_{HKS})$, la température ambiante $(\hat{\vartheta}_{RLS})$ et température de canalisation descendante du radiateur $(\Delta\vartheta)$ sont utilisées en tant que valeurs de mesure de température non corrigées.

4. Procédé selon l'une des revendications précédentes, **caractérisé en ce que** des données de caractéristiques thermiques et/ou la grandeur de correction $(K_{GES})$ sont calculées sous la forme d'un polynôme.

5. Procédé selon la revendication 4, **caractérisé en ce que** le polynôme est réalisé en tant que fonction de la température du radiateur $(\hat{\vartheta}_{HKS})$, de la température ambiante $(\hat{\vartheta}_{RLS})$ ou de la température de canalisation descendante du radiateur $(\Delta\vartheta)$ et **en ce que** des coefficients de polynôme $(a_m)$ dépendent de la température de canalisation montante du radiateur $(\hat{\vartheta}_{VL})$.

6. Procédé selon la revendication 4 ou 5, **caractérisé en ce que** l'on utilise un polynôme de deuxième ordre avec quatre points de repère dans la température de canalisation montante du radiateur $(\hat{\vartheta}_{VL})$.

7. Procédé selon l'une des revendications précédentes, **caractérisé en ce que** des données de caractéristiques thermiques, la grandeur de correction $(K_{GES})$ et/ou un coefficient de polynôme $(a_m)$ dépendent de valeurs C du radiateur.

8. Procédé selon l'une des revendications précédentes, **caractérisé en ce que** l'on détermine, en guise de données de caractéristiques thermiques du radiateur (HK), un facteur de correction $(K_{GES})$ utilisé en tant que grandeur de correction, une température de canalisation descendante de radiateur $(\Delta\vartheta)$ d'un radiateur (HK), une performance de radiateur $(\dot{Q})$, un incrément de quantité de chaleur $(\Delta Q)$, une température de canalisation descendante et/ou montante de radiateur $(\hat{\vartheta}_{RL}, \hat{\vartheta}_{VL})$, un flux massique de radiateur, une température ambiante de radiateur, une caractéristique de radiateur, une caractéristique de soupape et/ou une autorité de soupape.

9. Système pour la détermination de données de caractéristiques thermiques d'un radiateur (HK) avec un premier capteur de température pour détecter une température du radiateur $(\hat{\vartheta}_{HKS})$, un deuxième capteur de température pour détecter une température ambiante $(\hat{\vartheta}_{RLS})$, un autre capteur (8, 9) pour détecter la température de canalisation montante du radiateur $(\hat{\vartheta}_{VL})$ et une unité de calcul (3) pour le calcul des données de caractéristiques thermiques, **caractérisé en ce que** l'unité de calcul (3) présente un module (4) pour la détermination d'une grandeur de correction $(K_{GES})$ en fonction du point de fonctionnement réel du radiateur déterminé par la température de canalisation montante de radiateur $(\hat{\vartheta}_{VL})$ et un module (5) pour la détermination des données de caractéristiques thermiques, moyennant quoi la grandeur de correction $(K_{GES})$ dépend de la température de canalisation descendante de radiateur $(\Delta\vartheta)$, laquelle est formée par la différence entre la température du radiateur $(\hat{\vartheta}_{HKS})$ et la température ambiante $(\hat{\vartheta}_{RLS})$, et de la température de canalisation montante du radiateur $(\hat{\vartheta}_{VL})$.

10. Système selon la revendication 9, **caractérisé en ce que** les premier et deuxième capteurs de température sont intégrés dans un répartiteur des coûts de chauffage (1).

11. Système selon la revendication 9 ou 10, **caractérisé en ce que** l'autre capteur est un capteur de température de radiateur ou de température de canalisation montante de bâtiment (8, 9).

12. Système selon l'une des revendications 9 à 11, **caractérisé en ce que** l'unité de calcul (3) est intégrée dans un collecteur de données.

EP 1 770 469 B1

**Fig.1**

**Fig.2**

## Fig.3

## Fig.4

## Fig.5

## Fig.6

# Fig.7

# Fig.8

## Fig.9

## Fig.10

# Fig.11

# Fig.12

Fig.13

Fig.14

Kennlinien linearer Stellventile in Abhängigkeit der Ventilautorität

## Fig.15

relative Heizkörperleistung versus Ventilhub in Abhängigkeit der Ventilautorität

Ventil mit linearer Kennlinie

## Fig.16

**IN DER BESCHREIBUNG AUFGEFÜHRTE DOKUMENTE**

**In der Beschreibung aufgeführte Patentdokumente**

- DE 10108847 C1
- DE 2504797 A1
- DE 10108852 C2